# EUROPÄISCHE PATENTANMELDUNG

(11) **EP 0 762 791 A2**
(43) Veröffentlichungstag der Anmeldung: **12.03.1997**
(21) Anmeldenummer: 96109724.3
(22) Anmeldetag: 18.06.1996
(51) Int. Cl.: H04Q 7/32

(54) **Verfahren zum automatischen Umschalten der Betriebsart in einem Mobiltelefon für Multi-Mode-Betrieb**

(30) Priorität: 31.08.1995 DE 19532069
(71) Anmelder: Hagenuk Telecom GmbH, 24118 Kiel (DE)
(72) Erfinder: Jerono, Winfried, Dr., 24229 Dänischenhagen (DE); Flügel, Heinrich, Dr., 24568 Kaltenkirchen (DE); Schröer, Joachim, 24105 Kiel (DE); Rogall, Jürgen, 24211 Preetz (DE); Moussa, Daas, 24582 Brügge (DE)
(74) Vertreter: Hansmann, Dierk, Dipl.-Ing.

(57) **Zusammenfassung**

Das Mobiltelefon ist für Multi-Mode-Betrieb geeignet und als ein Grundgerät mit mindestens einer Systemschnittstelle ausgebildet. Die Systemschnittstelle verfügt über eine Sprachübertragungsschnittstelle, eine Steuerungsschnittstelle und eine gemeinsame Stromversorgung. Es sind mehrere Erweiterungseinheiten anschließbar. Zur Messung einer aktuellen Empfangsfeldstärke in unterschiedlichen Betriebsarten ist eine Feldstärkemeßeinheit mit der Systemschnittstelle verbunden. Eine Übertragung der ermittelten Meßdaten zu einer zentralen Recheneinheit ist vorgesehen. Die Recheneinheit weist einen Komparator zur Ermittlung einer höchsten Empfangsfeldstärke auf und aktiviert eine aktuelle Betriebsart.

## Beschreibung

Die Erfindung betrifft ein Verfahren zum automatischen Umschalten der Betriebsart in einem Mobiltelefon für Multi-Mode-Betrieb, bei dem ein zentraler Prozessor die von jeweiligen Einrichtungen zur Ermittlung der Empfangsfeldstärken in den möglichen Betriebsarten gelieferten Parameter (RSSI) so auswertet, daß das Gerät die Betriebsart mit dem höchsten Feldstärkewert wählt, falls dieser über einem minimalen Schwellwert liegt, so daß ein Verbindungsaufbau möglich ist, und daß für den Fall, in dem der minimale Schwellwert nicht überschritten wird, solange die Betriebsarten untersucht werden, bis diese Minimalanforderung erfüllt wird.

Ein Multi-Mode-Mobiltelefon ist ein Telefon, das mittels Funkverbindung schnurloses Telefonieren in mindestens zwei verschiedenen Betriebsarten unterstützt. Eine solche Betriebsart kann zum Beispiel der GSM-Betrieb sein, in dem sich das Multi-Mode-Mobiltelefon wie ein bekanntes Mobiltelefon nach dem europäischen GSM-Standard verhält und den Betrieb in einem der verfügbaren GSM-Netze (z.B. D1 und D2 in Deutschland ) ermöglicht. Weitere Betriebsarten können der Betrieb nach dem europäischen DCS1800-Standard (E-Netz) oder auch der Betrieb als schnurloses Telefon (z. B. DECT oder CT 1) sein.

Vorteilhaft ist die Benutzung von Multi-Mode-Mobiltelefongeräten besonders, wenn durch die zusätzlich angebotenen Betriebsarten die Verfügbarkeit des Mobiltelefons gesteigert werden kann. So ist in Gebäuden die Versorgung mit schnurlosen Telefonsystemen wie DECT oft gegeben, während die weiter entfernt stehenden Basisstationen der Mobilfunknetze (GSM bzw. DCS1800) nur schwer zu empfangen sind. Außerhalb von Gebäuden kehrt sich die Situation um und die in Gebäuden aufgestellten schnurlosen Telefonsysteme sind wegen der begrenzten Leistung nur schwer zu empfangen. Die Mobilfunknetze haben dagegen eine große Sendeleistung und damit außerhalb von Gebäuden eine gute Reichweite.

Aus der EP-A-0 521 609 ist ein Funktelefon bekannt, welches aus separaten Modulen, nämlich einem Basismodul und mindestens einem zusätzlichen steckbaren Modul besteht. Das Basismodul enthält die Funktionen, die einer analogen und einer digitalen Betriebsart gleich sind. Die zusätzlichen Module beinhalten den Hauptteil der zum Senden und Empfangen von analogen oder digitalen Signalen erforderlichen elektrischen Schaltungen. Dieses Funktelefon ist in einer einzigen Betriebsart betreibbar, wenn nur ein Zusatzmodul eingesteckt ist und kann als Dual-Mode-Telefon verwendet werden, wenn sowohl das erste, als auch ein zweites zusätzliches Modul in das Basismodul eingesteckt sind. Der damit verbundene Aufwand sowie das Erfordernis, verschiedene Module handhaben zu müssen, wird als nachteilig angesehen.

Aus der DE 35 28 886 ist ein "Funkfernsprechsystem" bekannt, mit dem - ausgehend von einer sehr geringen Reichweite von tragbaren Funktelefonen - diese auch dort eingesetzt werden können, wo ortsfeste Funkstellen nur in größeren räumlichen Abständen vorhanden sind.

Ein solches "Portable" wird dazu so erweitert, daß es in einer ersten Betriebsart mit ortfesten Sprechfunkstellen direkt in Kontakt treten kann und in einer zweiten Betriebart als portabler Teil eine schnurlosen Telefons unter Zwischenschaltung einer fahrzeuggebundenen Relaisstation einsetzbar ist. Ferner sind dazu Einrichtung zur Messung der Empfangsfeldstärke und anderer Kriterien für die Umschaltung sowie eine Signalauswertung für die Verbindungsüberwachung vorgesehen.

Die DE 37 21 889 beschreibt ein "rechnergesteuertes Teilnehmergerät zum Betrieb in Fernmeldenetzen, insbesondere Mobilfunknetzen, mit unterschiedlicher Systemtechnik". Hierzu sind mehrere Speicherbereiche mit der dem jeweiligen Fernmeldenetz entsprechenden Software vorgesehen, die wahlweise aktivierbar bzw. umschaltbar sind. Dies kann von Hand oder selbsttätig durch eine Auswerteeinrichtung erfolgen. Ein Auswahlkriterium kann aus der Qualität des Kontaktes zum Fernmeldenetz oder anderen Signalen abgeleitet werden.

Aus der DE 43 07 966 ist ein Mobilfunksystem mit einer Mehrzahl von Mobilstationen und einer Mehrzahl von an ein öffentliches Netz anschließbaren Basisstationen bekannt, bei dem mindestens eine mit einem internen Netz verbundene Übertragungsstation vorgesehen ist. Zu diesem internen Netz haben nur Teilnehmer einer geschlossenen Gruppe Zugriff. Diese Teilnehmer sind mit Mobilstationen versehen, die in einer internen Betriebsart eine Kommunikation über die Übertragungsstation und das interne Netz durchführen, und die in einer externen Betriebsart eine Kommunikations über eine Basisstation und das öffentliche Netz durchführen. Zur Umschaltung zwischen der internen und der externen Betriebsart ist in der Mobilstation eine Umschalteinheit vorgesehen.

In der EP-A-0 310 379 wird ein Funktelefon zur Verwendung in einem zellularen Mobilfunknetz beschrieben, welches mit einer Einrichtung zur Alarmierung der Teilnehmer in Abhängigkeit von einem Abfall der Stärke des über den Kommunikationskanal empfangenen Funksignals versehen ist, wenn das Funktelefon die Grenze eines Versorgungsbereichs erreicht. Wenn die Signalstärke weiter abfällt, wird die Telefonverbindung zu dem Gerät getrennt und eine Stand-by-Betriebsart aktiviert. Damit soll einem Teilnehmer rechtzeitig ein Signal gegeben werden, wenn er sich aus dem Versorgungsbereich eines Netzes entfernt, so daß keine plötzliche Gesprächsunterbrechung auftritt.

Der der Erfindung nächstliegende Stand der Technik wird in der EP 0 660 626 beschrieben. Diese Druckschrift betrifft ein Multi-Mode Funktelefon, mit dem ein Umschalten zwischen verschiedenen Funknetzsystemen in Abhängigkeit von verschiedenen Kriterien möglich ist. Diese Kriterien können die empfangene Signalstärke, Zugriffsrechte, Systemanfragen, Fehlerraten und Fortbewegungsgeschwindigkeiten eines Benutzers sowie eine Präferenz für eines der Funknetzsysteme sein. Das beschriebene Multi-Mode Funktelefon weist zu diesem Zweck Kommunikationseinrichtungen, die jedem Funknetzsystem zugeordnet sind, Überwachungseinrichtungen für die Signale der Funknetzsysteme, sowie davon beaufschlagte Auswahleinrichtungen auf, mit denen die Kommunikationseinrichtungen automatisch in Abhängigkeit von den oben genannten Kriterien ausgewählt werden. Als nachteilig hierbei wird jedoch angesehen, daß bei bestimmten Bedingungen und Vorgaben ein relativ häufiges Umschalten, welches mit zumindest kurzzeitigen Betriebsunterbrechungen verbunden ist, auftreten kann.

Der Erfindung liegt demgegenüber die Aufgabe zugrunde, ein Verfahren zum automatischen Umschalten der Betriebsarten in einem Mobiltelefon für Multi-Mode-Betrieb gemäß der eingangs genannten Art zu schaffen, bei dem mit einfachen und kostengünstigen Mitteln die Häufigkeit bzw. die Anzahl dieser Umschaltvorgänge erheblich reduzierbar ist.

Gelöst wird diese Aufgabe bei einem Verfahren der eingangs genannten Art dadurch, daß eine Priorisierungsreihenfolge der Betriebsarten vorgegeben wird, so daß die Betriebsart mit der höchsten Priorität ausgewählt wird, soweit die Empfangsbedingungen dieses zulassen, wobei für den Fall, in dem die Empfangsbedingungen für einen Verbindungsaufbau in dieser Betriebsart nicht ausreichend sind, geprüft wird, ob die Betriebsart mit der zweithöchsten Priorität möglich ist, und diese Prozedur bis zur Betriebsart mit der geringsten Priorität wiederholt wird, falls alle Betriebsarten mit höherer Priorität keine ausreichende Empfangsfeldstärke bieten, daß, nachdem eine Betriebsart ausgewählt wurde, die nicht die höchste Priorität hat, in bestimmten zeitlichen Abständen überprüft wird, ob durch Veränderung der Empfangsbedingungen eine Betriebsart mit höherer Priorität ausgewählt werden kann, wobei zuerst die Betriebsart mit der höchsten Priorität überprüft wird, danach die Betriebsart mit der zweithöchsten Priorität, bishin zur aktuell ausgewählten Betriebsart, daß die zeitlichen Abstände, nach denen höher priorisierte Betriebsarten untersucht werden, adaptiv je nach Priorität der Betriebsart und nach den Empfangsbedingungen in der Vergangenheit eingestellt werden, wobei die Zeitintervalle für die Betriebsart mit der höchsten Priorität am kürzesten eingestellt werden, während die Intervalle für die übrigen Betriebsarten entsprechend ihrer Priorität verlängert werden, und daß bei Empfangsbedingungen, die aus der Vergangenheit bekannt sind, die Zeitintervalle dahingehend beeinflußt werden, daß sich die Intervalle verlängern, wenn über eine bestimmte Zeitperiode T in der betreffenden Betriebsart keine ausreichende Empfangsfeldstärke gemessen wurde, wobei für jede Betriebsart ein maximales Zeitintervall bis zur nächsten Überprüfung festgelegt wird.

Besonders vorteilhaft ist die Kombination von verschiedenen Betriebsarten in einem Multi-Mode-Mobiltelefon, wenn der Benutzer die Einstellung der Betriebsart des Telefons nicht selbst vornehmen muß. Dies wird durch zwei wesentliche Merkmale der vorliegenden Erfindung erreicht:
- Erstens zeichnet sich das Multi-Mode-Mobiltelefon durch eine automatische Umschaltung der Betriebsarten aus, die dafür sorgt, daß entsprechend einer (z.B. vom Benutzer) vorher bestimmten Prioritätenliste immer ein verfügbares Netz mit der entsprechenden Betriebsart ausgewählt wird.
- Zweitens verfügt das Multi-Mode-Mobiltelefon über eine einheitliche Benutzeroberfläche mit einheitlichen Bedienelementen wie Anzeigeeinrichtung, Tastatur zur Eingabe, sowie Mikrophon und Hörer.

Auch die Stromversorgung erfolgt zentral von einem Akkupaket aus.

Die Benutzeroberfläche zeichnet sich dadurch aus, daß die Bedienung des Geräts unabhängig von der aktuellen Betriebsart in gleicher Weise erfolgt. Der Benutzer gibt die gewünschte Rufnummer ein und startet den Gesprächsaufbau mittels einer "Rufen"-Taste. Ebenso läßt sich der geräteeigene Rufnummernspeicher oder auch ein auf einer Benutzeridentifikationskarte (SIM, DAM etc.) vorhandener Rufnummernspeicher in jeder Betriebsart verwenden. Der Benutzer muß dabei die aktuelle Betriebsart des Gerätes nicht kennen, um telefonieren zu können. Vorteilhafterweise wird jedoch z. B. in der Anzeigeeinrichtung der aktuelle Betriebszustand angezeigt, so daß der Benutzer erkennen kann, ob er z.B. gerade preiswert über eine schnurlose Verbindung (DECT) spricht oder die (zur Zeit) teurere Mobilfunkverbindung (GSM) nutzt. Zusätzlich wird dem Benutzer aber auch die Möglichkeit gegeben, die Betriebsart manuell zu wählen.

In der Zeichnung sind Ausführungsbeispiele der Erfindung schematisch dargestellt. Es zeigen:
- Fig. 1: ein Übersichtsblockschaltbild der wesentlichen Funktionskomponenten,

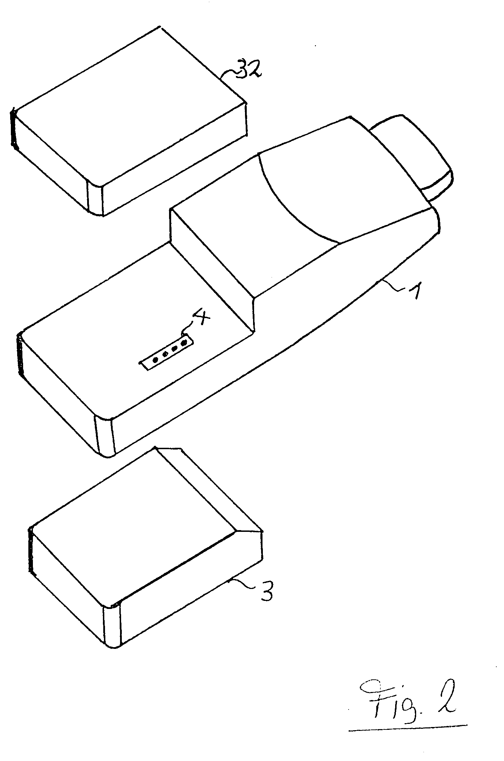

- Fig. 2: eine perspektivische Darstellung einer gerätetechnischen Realisierung,
- Fig. 3: ein Ablaufdiagramm zur Veranschaulichung der wesentlichen Verfahrensschritte
**und**
- Fig. 4: ein stärker detailliertes Ablaufdiagramm.

Bild 1 zeigt das Blockschaltbild eines Multi-Mode-Mobil-telefons . Dieses besteht aus einem Grundgerät (1), das mit einer Systemschnittstelle (4) ausgestattet ist, an welche von außen ein oder mehrere Erweiterungseinheiten (2) angeschlossen werden können. Die Erweiterungseinheiten (2) können insbesondere Einrichtungen für den Betrieb in einem Netzwerk enthalten, welches dem Grundgerät (1) nicht zugänglich ist. Es sind aber ebenfalls Testeinrichtungen und auch Programmiereinrichtungen an der Schnittstelle (4) betreibbar.

Die Systemschnittstelle (4) enthält Signalleitungen zur Übertragung von Sprachsignalen in analoger oder digitaler Form (Sprachübertragungsschnittstelle), sowie Leitungen zur Übertragung von Steuersignalen, mit deren Hilfe eine zentrale Recheneinheit (16) die Er weiterungsmodule (2) detektiert und kontrolliert (Steuerungsschnittstelle ). Auch die Signalisierungsdaten, z.B. zum Gesprächsaufbau, können so übertragen werden. Weiter wird mit den Steuerdaten auch die aktuelle Empfangsfeldstärke (RSSI, RSSI=Received Signal Strength Indicator) der Erweiterungseinheiten (2) übertragen, sodaß die zentrale Recheneinheit (16) entscheiden kann, welches Netz aktuell die beste Verbindungsqualität bietet. Eine weitere Komponente der Systemschnittstelle (4) ist eine Stromversorgung (17), die zentral von einer Stelle aus die verschiedenen Verbraucher versorgt.

Das Grundgerät (1) enthält alle Einrichtungen zum Betrieb in einem Netz, z.B. als herkömmliches GSM-Mobiltelefon. Dazu gehören die zentrale Recheneinheit (16) mit Eingabeeinrichtung (19) (Tastatur), eine Ausgabeeinrichtung (1A) (Display und Signallampe), eine Leseeinrichtung für ein eventuell erforderliches Benutzeridentifikationsmodul (18) (SIM für GSM, DAM für DECT), eine Schnittstelle zur akustischen Ein- und Ausgabe von Sprachsignalen mittels Mikrophon und Lautsprecher (Akustikeinheit 1B), ein Sprachcodec (15), ein Signalverarbeitungsblock (14) zur Aufbereitung von digitalen Signalen für die Funkübertragung und die Sende- und Empfangseinrichtung (12) selbst.

Die Empfangseinrichtung (12) ist mit einer Einrichtung zur Messung der Empfangsfeldstärke ausgerüstet, die den RSSI-Wert zur Verfügung stellt (RSSI-Meßeinheit 10). Ein übergeordneter Steuerungsblock (11) ermöglicht der zentralen Recheneinheit (16) die einfache Kontrolle und Steuerung aller betriebsartspezifischen Einrichtungen. Die Sende- und Empfangseinrichtung (12) ist mit einer Antenne (13) verbunden, die im Grundgerät (1) integriert oder am Grundgerät (1) außen befestigt ist. Eine Einrichtung zur Stromversorgung (17) ist ebenfalls im Grundgerät (1) enthalten, wobei die Akkumulatorzellen zur Speicherung von elektrischer Energie jedoch von außen zugänglich und tauschbar sein können.

Eine Erweiterungseinheit (2) wird mit der Systemschnittstelle (4) verbunden und wird damit von der zentralen Recheneinheit (16) des Grundgerätes (1) mittels des in der Erweiterungseinheit (2) enthaltenen Steuerungsblocks (21) kontrolliert und gesteuert. In der Erweiterungseinheit (2) sind alle für die zusätzliche Betriebsart erforderlichen Einrichtungen enthalten, sofern sie nicht bereits im Grundgerät (1) oder einer anderen Erweiterungseinheit (2) vorhanden sind und damit benutzt werden können. So enthält die Erweiterungseinheit (2) eine Sende- und Empfangseinrichtung (22) mit RSSI-Meßeinheit (20) und einem Signalverarbeitungsblock (24). Die Einrichtung zur Sprachkodierung und Dekodierung (25) ist nur erforderlich, falls die zusätzliche Betriebsart ein anderes Sprachkodierverfahren benutzt. Davon abhängig wird das Sprachsignal digital kodiert und digital oder analog übertragen. Die Erweiterungseinheit (2) kann eine integrierte Antenne (23) für die Sende- und Empfangseinrichtung (22) besitzen oder mit einer Schnittstelle zur Kopplung an die im Grundgerät (1) vorhandene Antenne (13) ausgerüstet sein. Die Stromversorgung der Erweiterungseinheit (2) erfolgt zentral über die Stromversorgung (17) des Grundgerätes (1). Umgekehrt kann jedoch auch die Erweiterungseinheit (2) die Einrichtung zur Stromversorgung des Grundgeräts enthalten.

Eine automatische Erkennung der Erweiterungseinheiten (2) ermöglicht das Wechseln von Einheiten ohne Änderung des Steuerprogramms der zentralen Recheneinheit (16). Dafür enthält die Systemschnittstelle (4) in der Steuerschnittstelle eine Einrichtung zur Steuerdatenübertragung, an die alle Erweiterungseinheiten (2) parallel angeschlossen werden. Diese Steuerdatenübertragung benutzt zur Datenübertragung Datenpakete, die mit einer Adressinformation sowie mit Kontrollinformationen und Netzinformationen variabler Länge ausgestattet sind. Jede Einheit ist mit einer eigenen Adresse ausgerüstet. In der Adressinformation eines jeden Datenpakets ist die Adresse der Empfängereinheit und die der Sendereinheit enthalten, und mittels einer Adressvergleichseinrichtung erkennt jede Einheit, ob sie das empfangene Datenpaket bearbeiten muß, oder ob es für eine andere Einheit bestimmt ist.

Nach dem Einschalten des Multi-Mode-Mobiltelefons schickt die zentrale Recheneinheit (16) Datenpakete mit den Adressen von allen anschließbaren Erweiterungseinheiten (2) über die Systemschnittstelle (4) mit der Aufforderung an die jeweiligen Einheiten, sich mit einem entsprechenden Anwortpaket zu melden. Anhand der empfangenen Antwortpakete erkennt die zentrale Recheneinheit (16) dann, welche Erweiterungseinheiten (2) aktuell zur Verfügung stehen. Davon abhängig werden die entsprechenden Betriebsarten dem Benutzer zur Verfügung gestellt.

In Bild 2 ist am Beispiel eines Dual-Mode-Mobiltelefons (DECT und GSM) die Anordnung der Erweiterungseinheiten (2) gezeigt. Das GSM-Grundgerät (1) ist mit einer Systemschnittstelle (4) ausgerüstet, die zugänglich wird, sobald das Paket mit Akkus zur Stromversorgung (32) entfernt wird. Anstelle des einfachen Akkupakets (32) kann dann eine DECT-Erweiterungseinheit mit integriertem Akku (3) gesteckt werden. Die DECT-Einheit besitzt in diesem Ausführungsbeispiel eine integrierte Antenne und kann wiederum eine Systemschnittstelle (4) für weitere Einheiten oder ein gewöhnliches Akkupaket aufweisen. Durch die automatische Erkennung der aktuellen Konfiguration bietet das Gerät dem Benutzer die größtmögliche Flexibilität.

Das Grundgerät (1) kann mit einfachem Akkupaket betrieben werden. Bei Bedarf kann das Grundgerät (1) durch ein oder mehrere Erweiterungseinheiten (2) ergänzt werden, die gesteckt sein müssen, um das zusätzliche Netzwerk mit dem entsprechenden Betriebsmodus, den die Erweiterungseinheit (2) zur Verfügung stellt, nutzen zu können. Eine Änderung des Gerätesteuerprogramms ist nicht erforderlich, da durch die automatische Konfiguration beim Einschalten des Geräts die jeweilige Einheit (2) erkannt und damit der entsprechende Betriebsmodus vom Gerätesteuerprogramm unterstützt wird.

Ein Verfahren zum automatischen Auswählen und Umschalten der Betriebsarten kann wie nachfolgend beschrieben durchgeführt werden.

Da auch ein Multi-Mode-Gerät zu einem bestimmten Zeitpunkt nur in einem Netz betrieben wird, stellt sich das Problem der Netzauswahl. Die Netzauswahl kann prinzipiell vom Benutzer manuell vorgenommen werden. Die Versorgungslage und damit die Verfügbarkeit der verschiedenen Netze kann sich aber schnell und sehr häufig ändern. Dies ist z.B. der Fall, wenn sich der Benutzer im häuslichen Bereich bewegt, wo einerseits eine Versorgung durch ein schnurloses System besteht (z.B. DECT) und andererseits am Rande der Reichweite dieses Systems eine Versorgung über ein Mobilnetz (z.B. GSM) besteht. In diesem Fall ist es für den Benutzer sehr aufwendig festzustellen, welche Betriebsart im Moment die besten Empfangsbedingungen bietet und diese dann über die Tastatur im Gerät auszuwählen.

Eine komfortablere Lösung besteht hier in einer automatischen Auswahl des Netzes durch das Multi-Mode-Gerät.

Das hier vorgestellte Verfahren zur Netzauswahl, welches im Dual-Mode-Gerät verwendet wird, ist dadurch gekennzeichnet, daß die Wahl in Abhängigkeit der Versorgungslage vollzogen wird. Bei gleichzeitiger Versorgung durch mehrere Netze kommt ein Auswahlverfahren zum Einsatz.

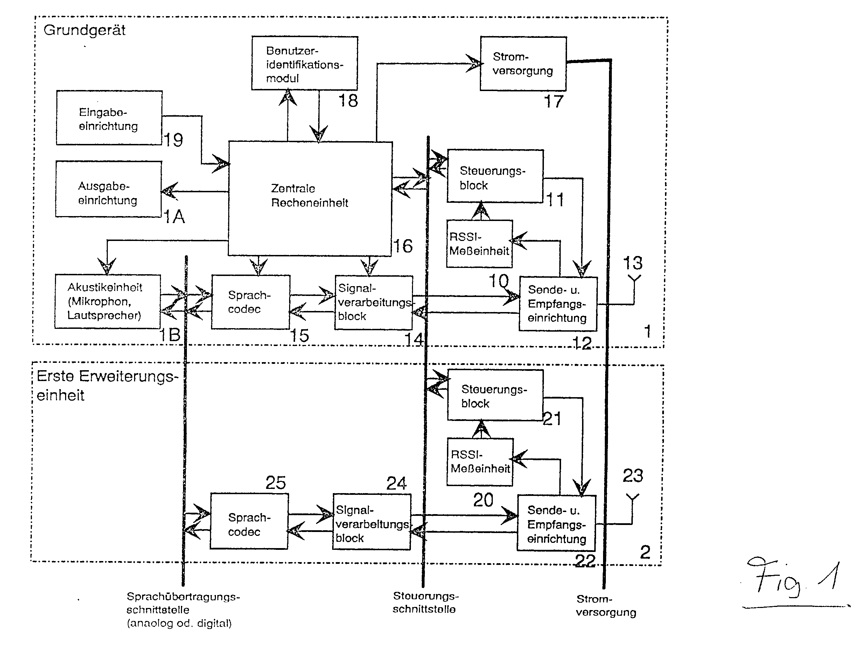

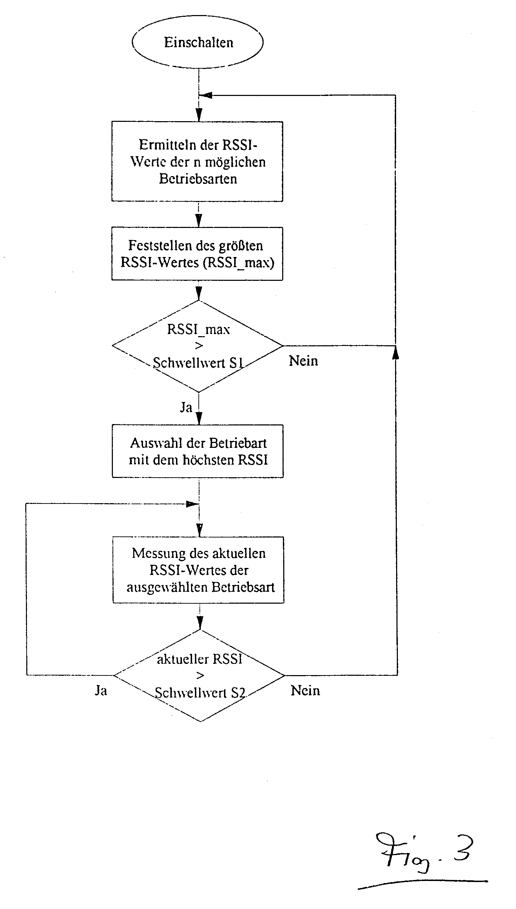

Da die Versorgungslage nach dem Einschalten des Gerätes unbekannt ist, muß zunächst die Empfangssituation ermittelt werden, bevor die Auswahl der Betriebsart erfolgen kann. Zu diesem Zweck wird in jeder Betriebsart über eine Einheit zur Ermittlung der Feldstärke (10) (vgl. Fig. 1) die augenblickliche Empfangssituation für diese Betriebsart festgestellt. Die Empfangssituation wird mit Hilfe des RSSI-Wertes quantitativ über den Steuerungsblock (11) bzw. (21) (vgl. Fig. 1) der zentralen Recheneinheit (16) des Geräts übermittelt. In der zentralen Recheneinheit (16) werden die RSSI-Werte der Betriebsarten miteinander verglichen und es wird die Betriebsart ausgewählt die den höchsten Empfangspegel besitzt, vorausgesetzt, dieser RSSI-Wert überschreitet einen minimalen (netzabhängigen) Schwellwert S1, der mindestens notwendig ist, um eine Verbindung zur jeweiligen Basisstation herzustellen (vgl. Fig. 3). Fällt während des Betriebs des Geräts der Feldstärkewert unter einen (netzabhängigen) Schwellwert S2 (typischerweise ist S2 < S1), so muß die oben beschriebene Prozedur wiederholt werden, bis eine Betriebsart gefunden wird, welche die entsprechende Forderung erfüllt.

Da zu erwarten ist, daß es in Zukunft viele Orte (z.B. Flughäfen, Bahnhöfe, Innenstadtbereiche, u.s.w.) geben wird, in denen gleichzeitig mehr als ein Netz in ausreichender Feldstärke empfangen werden kann, ist es sinnvoll, bei der Auswahl der Betriebsart die Möglichkeit einer Priorisierung der Betriebsart nicht nur nach dem RSSI zu ermöglichen. Wenn der Benutzer diese Priorisierung der Betriebsart vornehmen kann, so bietet das für ihn den Vorteil, Betriebsarten auswählen zu können, die geringere Kosten verursachen und/oder bessere Serviceangebote (Mehrwertdienste) anbieten.

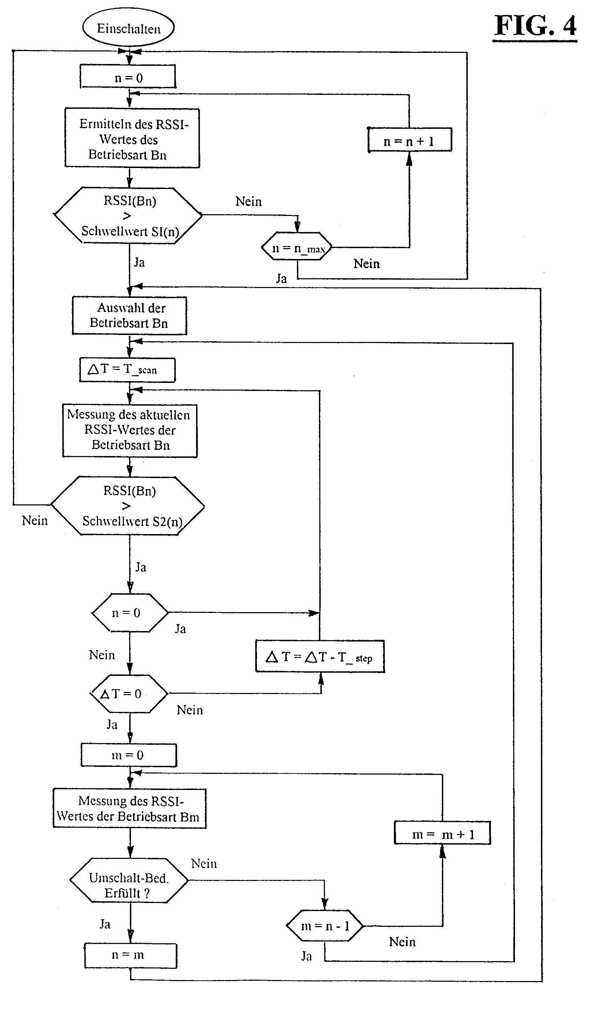

Zieht man die Priorisierung der Betriebsart bei dem Verfahren der Netzauswahl mit in Betracht, so verändert sich die oben genannte Prozedur in der Form, daß nun zunächst das Netz mit der höchsten Priorität ausgewählt wird (vgl. Fig. 4), Hierbei muß natürlich weiterhin gefordert werden, daß der RSSI-Wert den zugehörigen minimalen Schwellwert S1 überschreitet. Ist das Netz mit der höchsten Priorität nicht verfügbar, so wird untersucht, ob die Betriebsart mit der zweithöchsten Priorität möglich ist u.s.w.

Eine Erweiterung der oben beschriebenen Verfahrensweise ergibt sich, wenn die Priorisierung der Betriebsart auch dann berücksichtigt wird, wenn sich das Gerät in einer zwar stabilen, aber nicht der bevorzugten (d.h. der am höchsten priorisierten) Betriebsart befindet. Diese Erweiterung besteht darin, daß in bestimmten Zeitabständen Delta-T untersucht wird, ob z.B. aufgrund von veränderten Empfangsbedingungen höher priorisierte Betriebsarten zu diesem Zeitpunkt verfügbar sind.

Dabei ist die Reihenfolge der Überprüfung der Betriebsarten an die Priorität gekoppelt, d.h., daß zunächst die höchst priorisierte Betriebsart untersucht wird, und dann, falls diese nicht möglich ist, die Betriebsart mit der zweithöchsten Priorität u.s.w. Handelt es sich bei der aktuellen Betriebsart um einen Standard mit TDMA-Verfahren (z.B. GSM), so kann das oben beschriebene "Scannen" der alternativen Netze in den Zeiten geschehen, in denen keine Sende- bzw. Empfangsaktivitäten stattfinden. Das bedeutet, daß der Benutzer zu diesen Zeiten, in denen andere Netze überprüft werden, keine Einschränkungen in der Funktionalität des Multi-Mode-Geräts in Kauf nehmen muß. Insbesondere sind weiterhin kommende und gehende Gespräche möglich, da in diesem Fall das "Scannen" für die Dauer des Gesprächs ausgesetzt wird.

Die Entscheidung für ein Umschalten der Betriebsart (vgl. Fig. 4) ergibt sich als Folge der RSSI-Messung. Ein Kriterium kann z.B. sein, daß bei der Messung nur eines Wertes dieser über dem entsprechenden Schwellwert liegen muß.

Dieses einfache Umschaltverfahren mit Berücksichtigung der Priorität führt dazu, daß aus einer Betriebsart mit stabilen Empfangsbedingungen zu einer Betriebsart mit höherer Priorität gewechselt wird, falls die neue Betriebsart einen RSSI-Wert oberhalb des Schwellwertes S1 hat. Wird nun auf diese Betriebsart umgeschaltet und verändern sich während der Umschaltzeit die Empfangsbedingungen derart, daß in der neuen Betriebsart keine Versorgung durch die Basisstation mehr besteht, so muß sofort wieder nach neuen Netzen gesucht werden. Das führt im Bereich wechselnder Empfangsbedingungen zu häufigem Umschalten der Betriebsart, was wiederum mit einem häufigen Ein- bzw. Ausbuchen an den jeweiligen Basisstationen verbunden ist.

Um diesen Aufwand (auf Seiten der Netzverwaltung) zu minimieren, kann innerhalb des Verfahrens eine Hysterese implementiert werden. Dieses bewirkt, daß das Netz nur dann gewechselt wird, wenn die Versorgungslage mit großer Wahrscheinlichkeit für einen längeren Zeitraum gesichert ist. Daher wird die Entscheidung zur Umschaltung aus der Messung mehrerer RSSI-Werte gewonnen; z.B. werden N Messungen der Feldstärke des bevorzugten Netzes vorgenommen. Sind von den N Messungen M Feldstärkewerte über einem Pegel P, dann wird auf dieses priorisierte Netz umgeschaltet (Umschaltbedingung in Fig. 4). Es werden sowohl die Zahlen N und M als auch der Pegel P adaptiv entsprechend der aktuellen Versorgungslage angepaßt.

Das vorgestellte Verfahren ist ferner dadurch gekennzeichnet, daß Timer benutzt werden, die den gesamten zeitlichen Ablauf des Umschaltens steuern. Einer dieser Timer bestimmt z.B. die Abstände, in denen nach den höher priorisierten Netzen gesucht wird. Die Einstellung der Timer kann einerseits durch den Benutzer fest eingegeben werden, andererseits können die Werte der Timer der aktuellen Versorgungslage angepaßt werden. Der oben genannte Timerwert vergrößert sich z.B., wenn über einen bestimmten Zeitraum das priorisierte Netz nicht gefunden wird.

Auf der anderen Seite wird dieser Timerwert kleiner, wenn sich die Versorgungslage des alternativen Netzes verschlechtert und ein Abbruch der Verbindung wahrscheinlich wird. Dann ist es wichtig, möglichst schnell das priorisierte Netz zu finden. Ein Vorteil der variablen Timer besteht hierbei in der Minimierung des Energieverbrauchs, da die zum Scannen benötigten zusätzlichen elektrischen Komponenten seltener angeschaltet werden, wenn die Wahrscheinlichkeit klein ist, ein höher priorisiertes Netz zu finden. Es ergeben sich daher höhere Stand-By-Zeiten des Akkus. Weiterhin kann für jede Betriebsart ein eigener Timer definiert werden, der es ermöglicht, die Zeiträume zwischen zwei "Scans" abhängig von der Priorität einzustellen. So ist es sinnvoll, nach dem Netz mit der höchsten Priorität häufiger zu suchen, als nach untergeordneten Netzen.

## Patentansprüche

1. Verfahren zum automatischen Umschalten der Betriebsart in einem Mobiltelefon für Multi-Mode-Betrieb, bei dem ein zentraler Prozessor die von jeweiligen Einrichtungen zur Ermittlung der Empfangsfeldstärken in den möglichen Betriebsarten gelieferten Parameter (RSSI) so auswertet, daß das Gerät die Betriebsart mit dem höchsten Feldstärkewert wählt, falls dieser über einem minimalen Schwellwert liegt, so daß ein Verbindungsaufbau möglich ist, und daß für den Fall, in dem der minimale Schwellwert nicht überschritten wird, solange die Betriebsarten untersucht werden, bis diese Minimalanforderung erfüllt wird, dadurch gekennzeichnet, daß eine Priorisierungsreihenfolge der Betriebsarten vorgegeben wird, so daß die Betriebsart mit der höchsten Priorität ausgewählt wird, soweit die Empfangsbedingungen dieses zulassen, wobei für den Fall, in dem die Empfangsbedingungen für einen Verbindungsaufbau in dieser Betriebsart nicht ausreichend sind, geprüft wird, ob die Betriebsart mit der zweithöchsten Priorität möglich ist, und diese Prozedur bis zur Betriebsart mit der geringsten Priorität wiederholt wird, falls alle Betriebsarten mit höherer Priorität keine ausreichende Empfangsfeldstärke bieten, daß, nachdem eine Betriebsart ausgewählt wurde, die nicht die höchste Priorität hat, in bestimmten zeitlichen Abständen überprüft wird, ob durch Veränderung der Empfangsbedingungen eine Betriebsart mit höherer Priorität ausgewählt werden kann, wobei zuerst die Betriebsart mit der höchsten Priorität überprüft wird, danach die Betriebsart mit der zweithöchsten Priorität, bishin zur aktuell ausgewählten Betriebsart, daß die zeitlichen Abstände, nach denen höher priorisierte Betriebsarten untersucht werden, adaptiv je nach Priorität der Betriebsart und nach den Empfangsbedingungen in der Vergangenheit eingestellt werden, wobei die Zeitintervalle für die Betriebsart mit der höchsten Priorität am kürzesten eingestellt werden, während die Intervalle für die übrigen Betriebsarten entsprechend ihrer Priorität verlängert werden, und daß bei Empfangsbedingungen, die aus der Vergangenheit bekannt sind, die Zeitintervalle dahingehend beeinflußt werden, daß sich die Intervalle verlängern, wenn über eine bestimmte Zeitperiode T in der betreffenden Betriebsart keine ausreichende Empfangsfeldstärke gemessen wurde, wobei für jede Betriebsart ein maximales Zeitintervall bis zur nächsten Überprüfung festgelegt wird.

2. Verfahren nach Anspruch 1, dadurch gekennzeichnet, daß, falls während des Betriebes in der aktuellen Betriebsart der Feldstärkewert unter den minimalen Schwellwert sinkt, erneut die Auswertung der Empfangsfeldstärken durchgeführt wird.

3. Verfahren nach Anspruch 1 oder 2, dadurch gekennzeichnet, daß die Priorisierungsreihenfolge der Betriebsarten entweder statisch im Gerät eingestellt oder durch den Benutzer über die Tastatur veränderbar ist.

4. Verfahren nach einem der Ansprüche 1 bis 3, dadurch gekennzeichnet, daß während des Überprüfens der Betriebsarten mit höherer Priorität die Funktionalität des Multi-Mode-Geräts in der aktuellen Betriebsart aufrechterhalten wird, und daß die durch den Standard dieser Betriebsart geforderte Protokollschnittstelle zur Basisstation vollständig eingehalten wird, und daß kommende und gehende Verbindungen in dieser Betriebsart möglich sind.

5. Verfahren nach einem der vorhergehenden Ansprüche, dadurch gekennzeichnet, daß, um bei schnell wechselnden Empfangsbedingungen nicht zu häufig die Betriebsart zu wechseln, eine Hysterese eingeführt wird, die derart realisiert wird, daß in der gerade untersuchten Betriebsart N RSSI-Werte ermittelt werden, und daß für den Fall, in dem von diesen N Werten M Feldstärkewerte über einem bestimmten Pegel P liegen, auf diese Betriebsart umgeschaltet wird.

6. Verfahren nach einem der vorhergehenden Ansprüche, dadurch gekennzeichnet, daß unabhängig von der Anzahl der Erweiterungseinheiten dem Benutzer eine einheitliche Bedienung in allen Betriebsarten zur Verfügung gestellt wird, die dadurch realisiert ist, daß die entsprechenden Routinen und Abläufe der Bedienoberfläche für alle Betriebsarten in der zentralen Recheneinheit vorhanden sind.
